# EUROPEAN PATENT APPLICATION

(11) **EP 0 602 907 A1**
(43) Date of publication of application: **22.06.1994**
(21) Application number: 93309966.5
(22) Date of filing: 10.12.1993
(51) Int. Cl.: H02K 15/04

(54) **Application of press pads to the manufacture of high voltage, form wound coils and half-coils for electrical machinery**

(30) Priority: 14.12.1992 US 990193
(71) Applicant: GENERAL ELECTRIC COMPANY, Schenectady, NY 12345 (US)
(72) Inventor: Miller, George H., Clifton Park, New York 12065 (US)
(74) Representative: Pratt, Richard Wilson

(57) **Abstract**

An improved method of manufacturing formed coils for use in dynamoelectric machines particularly in high voltage applications wherein form wound coils are wound, bonded, shaped and sized with slot sections that are hot pressed to form a precisely sized, virtually void free coil structure by using press pad sheet material to line the press platens or wrap the coils in addition to using a suitable release liner to thus improve the uniformity of pressure on the coil surfaces and obtain precisely dimensioned coil cross sections with insulation of uniform density.

## Description

### TECHNICAL FIELD

The invention relates to the method of making high voltage form wound electrical coils using pressure equalizing materials for improving the uniformity of the pressure on the coil surface, thus resulting in more uniform density and improved surface quality of the finished form wound coil.

### BACKGROUND

In the process of making composite laminates wherein the product is either flat of includes arched parallel surfaces, it is conventional practice to use press pads to equalize the molding or shaping pressure during the pressing process to thus reduce wear on the pressure plates, as well as obtaining a relatively defect-free finished surface. Conventional press pad materials used in forming flat or arched parallel surface finished laminates include, among other things, kraft paper, aramid paper, canvas, chip board, woven fabrics, synthetic sheets and various specially designed composite or rubber-like materials. As indicated in the U.S. Patent No. 4,612,081 issued to Kasper et al on September 16, 1986 where the laminates, such as wood chip plates are heated during the pressing operation, the use of such materials presents a problem due to the relatively low thermal conductivity between the press plates and the material to be pressed. Thereafter, the Kasper patent teaches the use of an oil filled hydrostatic pressure pad including a floating thin steel sheet in order to produce the disclosed flat laminate products.

Various mold release sheets in both textured and untextured patterns have also been proposed in U.S. Patent No. 4,753,847, for example, which issued to Wilheim et al on June 28, 1988. Such mold release sheet structures have been found to be useful in fabricating multi-layer laminates, such as printed circuit boards and other planar articles.

In the production of shaped articles, such as form wound coils for electrical machinery, the conventional practice is to simply line the press or wrap the article to be pressed with a suitable release liner so as to prevent the article being pressed from bonding to the press platens. For example, in current practice insulated coils are overtaped with one or two layers offilm material as a release liner. In some instances, one of the films is replaced by either a shrinkable film or a treated narrow woven fabric for the purpose of assisting in consolidating the insulation on the coil. Such current practice, although somewhat varied, is nevertheless limited to the inclusion of a release material forfacilitating the release of the shaped product from the shaping mold.

In forming such coils or half coils, it is desirable to improve the uniformity of the pressure on the coil surface so as to obtain more uniform density in the finished coil laminate, as well as improving the surface quality thereof. In form wound coils for use in high voltage applications of 5200 volts or more in addition to the above noted criteria, it is extremely important that the high voltage insulation on such coils be at an optimum density for the specific insulation and use. That is to say, it is vital that the edges and corners are not so sharp as to concentration the electrical stress at such portions. Additionally, excess roundness of the coils at such locations is an indication of insufficient density leading to an inability to withstand long term voltage stresses, particularly in high voltage dynamoelectric machine environments.

I have discovered that the use of press pads conventionally used to manufacture flat composite laminates, such as circuit boards, can be applied in the process of formed insulated coil manufacturing and is particularly useful in forming high voltage dynamoelectric machine formed coils where the manner and form of the insulation on individual strands, turns and the formed coil is somewhat complex. Such press pads may be used to either line the press dies or to wrap the coils prior to pressing so as to improve the uniformity of the pressure on the surface of the coil being formed whereby the resulting coil after pressing exhibits more uniform density and improved surface quality of the finished coil. Moreover, such use provides optimum density of the coil insulation, particularly at edges and corners, which is vital for use in high voltage applications.

### BRIEF DESCRIPTION OF THE DRAWINGS

These, as well as other objects and advantages will be better appreciated by a careful study of the following detailed description taken in conjunction with the accompanying drawings in which:
FIGURE 1 illustrates a typical cross-sectional view of a 15,000 volt coil cross section including multiple layers of conductor turn and coil insulation;
FIGURE 2 is a perspective view partially in cross section illustrating the shape of a typical formed stator coil formed by the herein disclosed manufacturing process; and
FIGURE 3 is a more detailed view of a portion of a stator coil of the nature shown in FIGURE 2 for use in high voltage AC form-wound motors and generators.

### DETAILED DESCRIPTION OF THE INVENTION

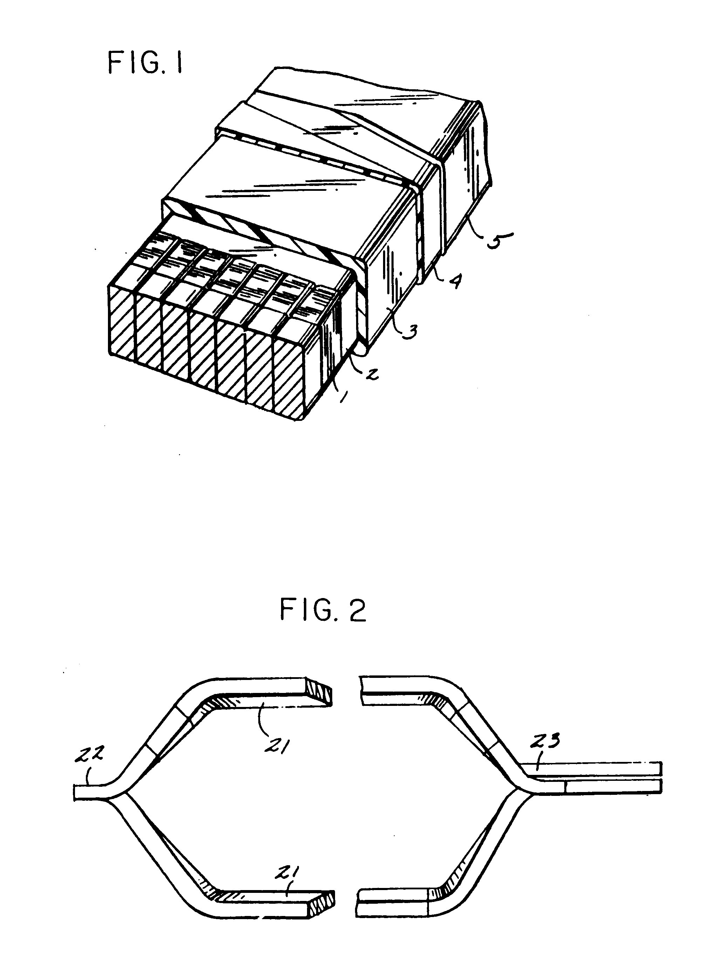

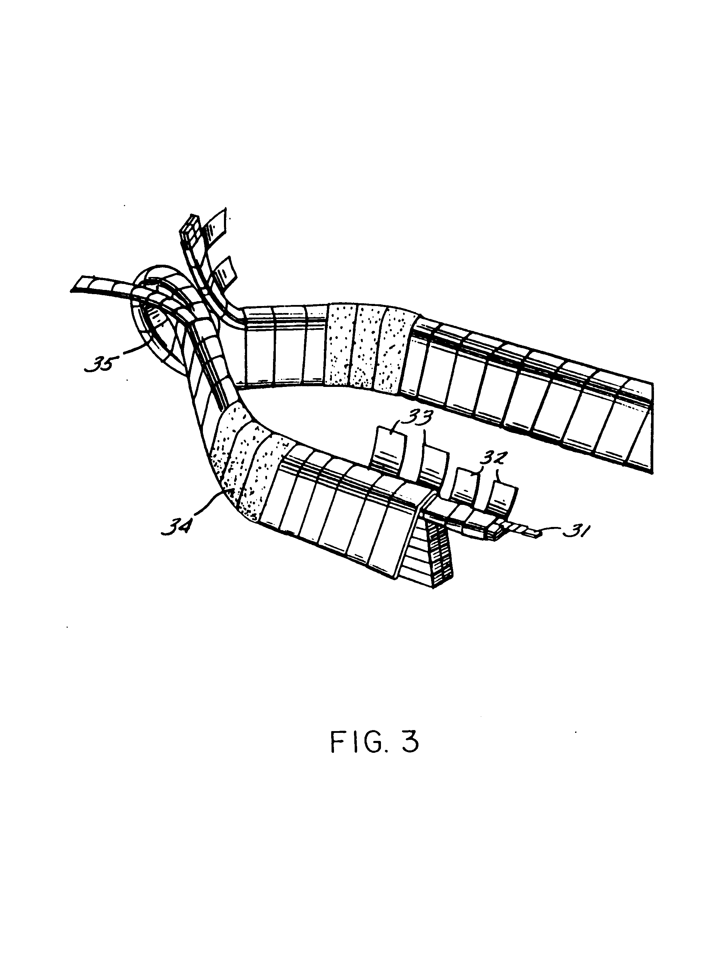

As may be seen from a consideration of FIGURES 1 and 3, hot pressed formed coils for use in high voltage motors and generators involve complex insulation systems. For example, as shown in FIGURE 3, wire strands 31 are individually insulated with fused polyester and glass, mica tapes or other insulation materials. Depending upon the rating and design of the winding turn, turn insulation 32 consisting of epoxy bonded mica tape and woven glass cloth tapes are applied. Thereafter, coil insulation 33 consisting of mica and glass tapes are applied along with epoxy resin between each layer to fill voids, thus reducing internal corona. Still further corona grading tapes or paints and conducting tapes or paint 34, as well as chemical resistant resins 35, may be added for corona damage prevention and added environmental protection, respectively.

FIGURE 1 is an alternative cross-sectional view of a high voltage coil illustrating in cross-sectional view the extensive layered insulation of a typical coil for insertion into a dynamoelectric stator slot, for example. Such insulation in addition to individually insulated strands would include turn insulation 1, a coating of epoxy bonding resin 2, insulating ground wall taped layers 3, mechanical protection, such as shrink dacron 4 or woven glass tapes, as well as a corona and grading tape protection layer 5.

Since the stator slots are of limited size and the insulated coils are designed to optimize slot fill factors, it is vital that the coils, particularly the straight slot sections, are of a predetermined size and are dimensionally stable. As to the outer cross-sectional dimensions, it is additional vital that the rather complex high voltage insulation structure be void free and at an optimum density, particularly at the edges and corners, in order to avoid excessive electrical stress at such locations.

Form wound high voltage coils are conventionally assembled on forming devices where the several stages of insulation are added to form a flat coil having a cross-sectional configuration such as is illustrated in Figures 1 or 3, for example. Thereafter, the coils are generally shaped on a spreader device so as to obtain coils of an exemplary shape, as is illustrated in FIGURE 2, which would include relatively straight slot sectors 21, as well as end turn portions 22 and 23.

Although the coil spreader shapes the coil to relatively precise dimensions, as aforementioned, the slot sectors 21 of the coil in particular must be further processed to obtain a predetermined size dictated by the stator slot dimensions. Moreover, the finished coil, particularly in the slot sectors, must form a dimensionally stable structure of relatively uniform density and good surface quality for ease of installation.

Such sizing and bonding of the several insulating layers is produced by way of hot pressing the slotsec- tors to a predetermined size using heated press platens.

Such hot pressing conventionally involves only the use of a release liner to line the press or wrap the article to be pressed so as to prevent the coil surface from bonding to the press platens. Such conventional processing, however, does not produce the uniformity of pressure on the surface of the coil which is vital in order to obtain uniformity of the density of the several insulating layers, particularly at corners and bends in order to maintain the appropriate protection provided by the insulation, which is most critical in a high voltage application.

It has been found that coils having more uniform insulation density and improved surface quality may be obtained through the addition of press pad material between the coil and the conventionally used press die release liner. That is to say, the heated press dies in addition to being lined with a release liner, such as "Teflon" or other conventional release materials, are also lined with press pad material which may include, but is not limited to, kraft paper, aramid paper, woven fabrics or specially designed composite synthetic sheets or rubber-like materials. Alternatively, such materials may be used to wrap the coil, as opposed to lining the press platens.

The use of such press pad material thus produces the desirable result of improving the uniformity of the pressure over the surface of the coil to obtain coil slot sections of a precisely predetermined size having dimensional stability through bonding of the several insulation layers. Moreover, the resulting laminated insulation layers are not only virtually void free but are of substantially uniform density including on the conductor edges and corners, which is vital in high voltage environments to eliminate excess electrical stress on the insulation. Thus, the formed coils are wound, bonded, sized and shaped to precise shapes and dimensions to form high voltage coils that are mechanically and electrically stable so as to withstand long term high voltage stresses.

While the invention has been described with respect to what is presently regarded as the most practical embodiment thereof, it will be understood by those of ordinary skill in the art that various alterations and modifications may be made which nevertheless remain within the scope of the invention as defined by the claims which follow.

## Claims

1. A method of making formed insulated coils for use in dynamoelectric machines wherein the coils include linearly extending slot sections for placement in slots of said machines and further include end turn portions for connecting the coil slot sections, said method comprising:
winding said coils to obtain a substantially flat elongated coil structure, said coil structure in cross section including multiple laminated layers of conductors with one or more layers of insulation around the conductors,
form spreading said coil structure to form said coil slot sectors and end turn portions in a curvilinear shape compatible for installation into said dynamoelectric machines,
pressing said coil slot sections to precisely size the outer dimensions of the slot sectors,
said pressing including the steps of placing a release liner between the platens of a press and the coil slot sections, placing press pad sheet material between said release liner and the coil slot sections and closing said press platens to press the coil slot sectors to a precise size whereby the pressed coi slot sectors exhibit substantially uniform insulation density around the coil slot sector cross sections.

2. A method as in claim 1 wherein the coils are stator coils for use in a high voltage dynamoelectric machine.

3. A method as in claim 1 wherein said platens are heated, said layers of insulation include thermosetting resin and said pressing virtually eliminates voids in the insulation layers for reducing corona effect internal to the coil structure.

4. A method as in claim 1 wherein said press pad sheet material is kraft paper, aramid paper, woven or composite sheet materials.

5. A method as in claim 1 wherein said press pad sheet material is placed by lining said press platens or wrapping said coil slot sections with the material.
